Europäisches Patentamt

European Patent Office

Office européen des brevets

(11) Publication number: **0 420 098 A2**

# EUROPEAN PATENT APPLICATION

(21) Application number: 90118304.6

(22) Date of filing: 24.09.90

(51) Int. Cl.5: **B29C 45/66**, B29C 45/33

(30) Priority: 27.09.89 JP 249286/89

(43) Date of publication of application:
03.04.91 Bulletin 91/14

(84) Designated Contracting States:
DE FR GB IT

(71) Applicant: FUJI JUKOGYO KABUSHIKI KAISHA
7-2, Nishi-Shinjuku 1-Chome Shinjuku-Ku
Tokyo-To(JP)

(72) Inventor: Tamura, Yosiyuki
1110, Hinata-cho
Tatebayashi-Shi, Gunma-ken(JP)

(74) Representative: Liesegang, Roland, Dr.-Ing. et
al
FORRESTER & BOEHMERT
Widenmayerstrasse 4 Postfach 22 01 37
W-8000 München 22(DE)

(54) Injection mold assembly.

(57) An injection mold assembly to be utilized for an injection molding machine comprises a stationary mold (1) and a movable mold (3). The stationary and movable molds (1, 3) are provided with peripheral edges having protrusions (1c, 3c) The protrusions (1c, 3c) are clamped by a mold fastening device (7) comprising a hydraulic cylinder (7a) and a fastening member (7b) operated by the hydraulic cylinder so as to clamp together the protrusions (1c, 3c) during injection process. The stationary mold (1) has a core (6) for forming a hole in a product to be molded. The core (6) is operated by a hydraulic cylinder (9) movable in a different direction from that of the movable mold (3).

FIG. I

EP 0 420 098 A2

## INJECTION MOLD ASSEMBLY

### BACKGROUND OF THE INVENTION

The present invention relates to an injection mold assembly utilized for an injection molding machine.

Recently, in the automobile industry, various kinds of elements or parts having different shapes and sizes such as clips and bumpers have been manufactured by injection molding.

A known injection molding machine generally comprises, as shown in Fig. 4, a stationary mold 1 and a movable mold 3. The stationary mold 1 is secured to a stationary platen 2 and provided with a cavity side 1a having a shape in conformity with the shape of a product to be molded. The movable mold 3 is secured to a movable platen 4 opposed to the stationary platen 2 and allowed to reciprocate by a mold clamping ram (not shown). The movable mold 3 is provided with a protruding cavity side 3a which protrudes into the cavity side 1a of the stationary mold 1 when the stationary and movable molds 1, 3 are closed.

When parting line surfaces 1b, 3b of the stationary and movable molds 1, 3 come into contact with each other under pressure during a mold clamping (closing) process, the cavity side 1a of the stationary mold 1 and the protruding cavity side 3a of the movable mold 3 are engaged so as to form a cavity 5 therebetween. Here the cavity 5 has a shape corresponding to a shape of a product to be molded.

In the subsequent molding operation, a molten material is injected into the cavity 5 through a nozzle and the injection pressure is kept temporarily thereafter. The injected molten material is then subjected to a cooling process to solidify the material. In the mold opening process, the movable mold 3 is retracted and a solidified material, i.e. a molded product, is taken out from the molds 1, 3.

During the molding processes described above, when it is required to form a hole, to a molded product, having an extending direction different from the moving direction of the movable mold 3, a core 6 is preliminarily located for the cavity 5 and the core 6 is projected into the cavity 5 after the mold clamping (closing) process. The molten material is thereafter injected into the cavity 5 and the core 6 is removed before the mold opening process thereby forming a hole in the injected material, thus obtaining a molded product having a hole.

However, the recent tendency in the automobile industry, for example, requires molded products having a large size. Under these circumstances, in a case where a large sized mold assembly is utilized for a conventional molding machine, the clamping force of the molding machine may be insufficient for molding a large sized product and may not withstand a pressure during the injection process and the succeeding pressure keeping process. In order to obviate this problem it is obliged to utilize a molding machine having itself a large size with a large mold clamping force, resulting in increased equipment investment and inconvenience.

### SUMMARY OF THE INVENTION

An object of the present invention is to substantially eliminate the defects or drawbacks encountered in the prior art described above and to provide an injection mold assembly capable of bearing against a large injection pressure even if the assembly is applied to an injection molding machine provided with a relatively small mold clamping force.

Another object of the present invention is to provide an injection molding assembly provided with a mold fastening device which firmly clamps stationary and movable molds during a time after the mold clamping (closing) process and before the mold opening process.

These and other objects can be achieved according to the present invention by providing an injection mold assembly to be utilized for an injection molding machine, comprising a stationary mold provided with a protrusion formed on a peripheral edge thereof, a movable mold selectively engaged with the stationary mold to form a cavity therebetween so as to inject a molten material into the cavity in the injection process, and being provided with a protrusion formed on a peripheral edge thereof and opposed to the protrusion of the stationary mold, and a mold fastening device for clamping together the protrusions of the stationary and movable molds in the injection process.

In a preferred embodiment, the injection mold assembly further comprises a core for forming a hole to a product to be molded and a first hydraulic cylinder for actuating the core so as to protrude into and to retract from the cavity formed when the stationary and movable molds are closed, and the fastening device comprises a second hydraulic cylinder and a mold fastening member operated by the second hydraulic cylinder, both the hydraulic cylinders are controlled so as to be synchronously operated by a controller. The fastening member is moved by the hydraulic pressure to a position to clamp the protrusions of the stationary mold and the movable mold after the molds are clamped and to a position to release the protrusions before the molds are opened.

According to the characteristics of the present invention described above, the stationary and movable molds of the injection mold assembly are provided with the peripheral edges on which the protrusions are formed, respectively. These protrusions are clamped by fastening devices during a molding material injection process in an injection molding operation including the injection process, an injection pressure keeping process and a cooling process. The mold clamping operation of the fastening device is carried out by the hydraulic pressure in a synchronous manner for operating the core provided for the mold assembly after the mold clamping process. Accordingly, the injection mold assembly in the closed state can be prevented from being accidentally opened during the injection process and the injection pressure keeping process even if the inner pressure of the cavity of the injection mold assembly exceeds the mold clamping force of the injection molding machine, thus allowing the use of the injection molding machine having a relatively small mold clamping force.

## BRIEF DESCRIPTION OF THE DRAWINGS

Fig. 1 is a brief side view of a closed injection mold assembly comprising stationary and movable molds and an actuating device therefor, according to the present invention;

Fig. 2 is a chart for showing operations of the injection mold assembly shown in Fig. 1;

Fig. 3 is a general side view of an injection molding machine to which the present invention is applied; and

Fig. 4 is a cut-away view of a closed injection mold assembly of the prior art.

## DESCRIPTION OF THE PREFERRED EMBODIMENT

A preferred embodiment of the present invention will become understood from the following detailed description referring to the accompanying drawings.

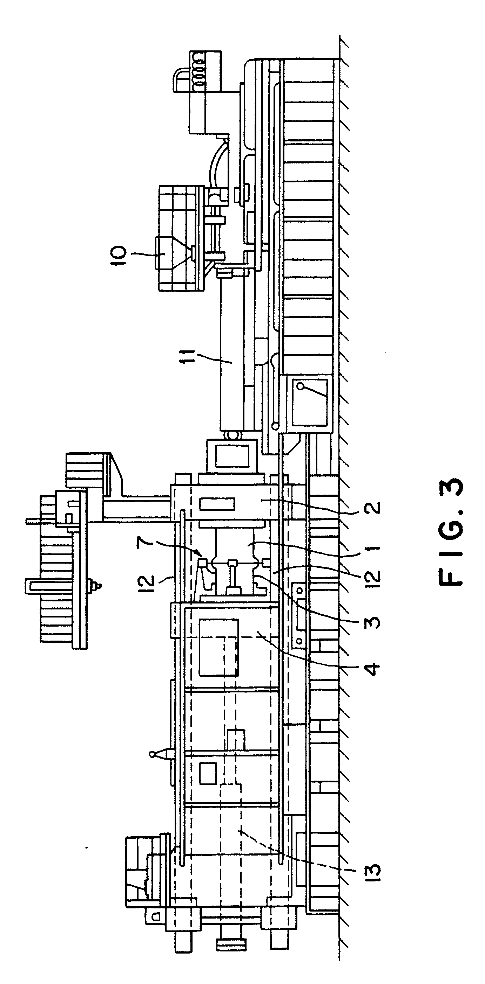

Referring to Fig. 3 showing an injection molding machine, a molding material is first supplied in a hopper 10 and fed into a heating cylinder 11. In the heating cylinder 11, the molding material is heated and melted. The heated and molten molding material is injected into a cavity formed by closing stationary and movable molds 1 and 3 through an injection nozzle (not shown) formed at the front end portion of the heating cylinder 11. The stationary mold 1 is secured to a stationary platen 2 and the movable mold 3 is secured to a movable platen 4 which is moved along tie-bars 12 in a reciprocating manner by a clamping cylinder 13.

The molding material injected into the cavity is molded as a molded product by a molding operation including a pressure keeping process and a cooling process to solidify the injected molding material. After the cooling process, the movable mold 3 is moved backwards to open the mold by the operation of the mold clamping cylinder 13 and a molded product is taken out from the mold. This series of processes, including mold clamping (closing), injection pressure keeping, cooling and mold releasing (opening) processes, is referred to an injection molding cycle, and in an actual operation, such an injection molding cycle is repeated.

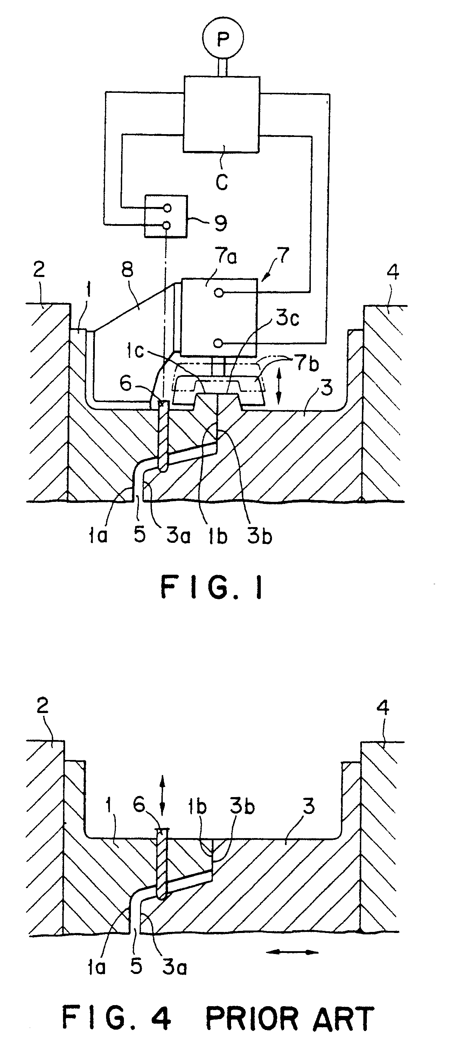

The injection mold assembly according to the present invention will be described in detail hereunder with reference to Fig. 1.

The stationary mold 1 secured to the stationary platen 2 is provided with a half of a cavity side 1a having a shape formed in conformity with a product to be molded. The movable mold 3 secured to the movable platen 4 is opposed to the stationary platen 2 and moved by the mold clamping cylinder 13, shown in Fig. 3. The movable mold 3 is provided with a cavity side 3a having a shape formed also in conformity with another half of the product to be molded. Peripheral edges of the respective stationary and movable molds 1 and 3 are formed as protrusions 1c and 3c opposing each other and which are described hereinafter.

In the mold clamping process, the movable mold 3 is moved towards the stationary mold 1 and a parting line surface 3b of the movable mold 3 comes into contact to a parting line surface 1b of the stationary mold 1. Under this condition, the cavity sides 1a and 3a are engaged with each other thereby forming a mold cavity 5 therebetween having a shape in conformity with a shape of an actual product to be molded.

As shown in Fig. 1, a core 6 is provided for the stationary mold 1 in the cavity 5 for forming a hole, to a product to be molded, having an axial direction different from the moving direction of the movable mold 3. The core 6 is projected into and retracted from the cavity 5 by the operation of an actuator, i.e. a hydraulic cylinder 9. After the stationary and movable molds 1 and 3 are clamped, the core 6 is protruded into the cavity 5. The molding material heated and melted by the heating cylinder 11 of the injection molding machine shown in Fig. 3 is injected, in the injection process, into the cavity 5 through the injection nozzle formed on the front portion of the heating cylinder 11.

In the next step, the injection pressure for the molding material is kept for a predetermined time in the pressure keeping process and the injected material is then cooled thereby solidifying the material to form a molded product.

The core 6 projected into the cavity 5 is retracted by the operation of the hydraulic cylinder 9. In the subsequent mold opening process, the movable mold 3 is moved backward by the operation of the mold clamping cylinder 13 so as to be separated from the stationary mold 1 and the molded product is then taken out from the mold.

A mold fastening device 7 is secured to the upper portion of the stationary mold 1 through a bracket 8 and the fastening device comprises an actuator such as a hydraulic cylinder 7a and a fastening member 7b having a substantially U-shape in cross section. The fastening member 7b is operated by the hydraulic cylinder 7a and clamps together the protrusions 1c and 3c formed on the peripheral edges of the stationary and movable molds 1 and 3 to prevent the molds 1, 3 from being opened when both the molds 1, 3 are closed. Namely, the fastening member 7b is moved vertically toward the protrusions 1c and 3c by the operation of the hydraulic cylinder 7a so as to take a mold clamping position shown by a solid line and a mold releasing position shown by a dot-chain line in Fig. 1. The hydraulic cylinder 7a is operated by a hydraulic pressure which operates the core 6 after the mold clamping (closing) process and before the mold opening process. In detail, the hydraulic cylinder 7a is operated to move the fastening member 7b to the mold clamping position (solid line) during the injection, pressure keeping and cooling processes described hereinbefore to prevent the molds from being opened and to the mold releasing position (dot-chain line) during the mold clamping and releasing processes to allow the molds to be moved.

A controller controls the hydraulic pressure of the hydraulic cylinder 7a in conjunction with a hydraulic pump P and also controls the hydraulic pressure of the hydraulic cylinder 9 for actuating the core 6 in the synchronized manner therewith.

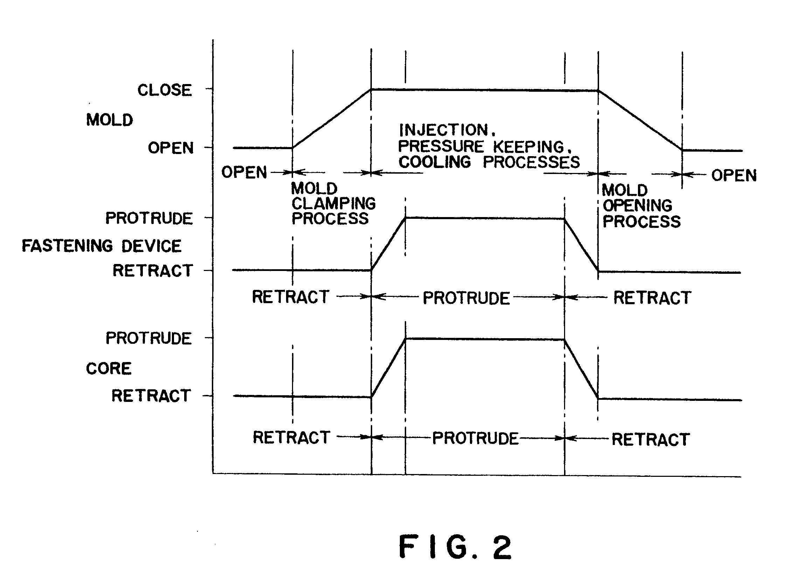

The mold assembly including the molds 1, 3, the mold fastening device 7 and the core 6 is operated in accordance with the time chart shown in Fig. 2 and described hereunder.

Referring to Fig. 2, the stationary mold 1 and the movable mold 3 are closed by moving the latter towards the former in the mold clamping process. Under the mold closed condition, the injection process, the pressure keeping process and the cooling process are carried out continuously.

After the cooling process, the molds 1 and 3 are opened in the mold opening process and the molded product is taken out from the molds. These processes are referred to as one injection molding cycle and the cycle is repeatedly carried out in the actual operation.

The core 6 is provided so as to protrude into the cavity 5 after the stationary mold 1 and the movable mold 3 are closed in the mold clamping process and retracted from the cavity 5 before the mold opening process starts.

As described hereinbefore, the hydraulic cylinder 7a is actuated by the hydraulic pressure applied to the core 6 by the hydraulic cylinder 9 in synchronism with the movement of the core 6. Accordingly, the mold fastening member 7b of the fastening device 7 is also operated in synchronism with the movement of the core 6 so as to move between the mold fastening position and the mold releasing position. The fastening member 7b firmly clasps together the protrusions 1c and 3c whereby the molds can be prevented from being accidentally opened at a time when the inner pressure in the cavity is increased excessively. The synchronous movements of the core 6 and the fastening member 7b, i.e. the actuations of the hydraulic cylinders 9 and 7a are controlled by the controller C. In an alternation, the fastening device may be operated by hydraulic pressure of another hydraulic means which acts substantially the same manner to that of the hydraulic cylinders 9 and 7a after the mold clamping (closing) process and before the mold opening process. The fastening devices may be provided on each side of the molds so as to increase a clamping force.

While the presently preferred embodiments of the present invention have been shown and described, it is to be understood that these disclosures are for the purpose of illustration and that various changes and modifications may be made without departing from the scope of the invention as set forth in the appended claims.

## Claims

1. An injection mold assembly to be utilized for an injection molding machine, characterized by comprising:

a stationary mold (1) provided with a first protrusion (1c) formed on a peripheral edge thereof;

a movable mold (3) selectively engaged with said stationary mold (1) to form a cavity (5) therebetween so as to inject a molding material into the cavity in an injection process, and being provided with a second protrusion (3c) formed on a peripheral edge thereof and opposing to the first protrusion (1c); and

mold fastening device (7) for clamping together both the first and second protrusions (1c, 3c) in the injection process.

2. The injection mold assembly according to claim 1, further comprising:

a core (6) and an actuator (9) for actuating said core (6) so as to protrude into and be retracted from the cavity (5) formed when said stationary and movable molds (1, 3) are closed for forming a hole in a product to be molded.

3. The injection mold assembly according to claim 2, wherein:

said actuator (9) is a hydraulic cylinder.

4. The injection mold assembly according to claim 1, wherein:

said mold fastening device (7) comprises a mold fastening member (7b), an actuator (7d) for operating said mold fastening member, said mold fastening member (7b) being moved to a position to clamp said protrusions (1c, 3c) of said stationary and movable molds (1, 3) after the molds are engaged and to a position to release said protrusion (1c, 3c) before the molds are opened.

5. The injection mold assembly according to claim 4, wherein:

said actuator (7a) is a hydraulic cylinder.

6. The injection mold assembly according to claim 5, further comprising:

a core (6) for forming a hole to a product to be molded, a hydraulic cylinder (9) for actuating said core (6) so as to protrude into and be retracted from the cavity (5) formed when said stationary and movable molds (1, 3) are closed and a controller (c) for controlling both the hydraulic cylinders (7a, 9) to be synchronously operated.

FIG. 1

FIG. 4   PRIOR ART

FIG. 2

EP 0 420 098 A2

FIG. 3